# EUROPEAN PATENT APPLICATION

(11) **EP 1 645 978 A1**
(43) Date of publication of application: **12.04.2006**
(21) Application number: 05108797.1
(22) Date of filing: 23.09.2005
(51) Int. Cl.: G06F 17/30

(54) **Organization of static and dynamic data sets**

(30) Priority: 09.10.2004 US 617488; 11.10.2004 US 962287
(71) Applicant: MICROSOFT CORPORATION, Redmond, Washington 98052-6399 (US)
(72) Inventor: Turski, Andrzej c/o Microsoft Corporation, Redmond, WA 98052 (US); Cheng, Lili c/o Microsoft Corporation, Redmond, WA 98052 (US); MacLaurin, Matthew c/o Microsoft Corporation, Redmond, WA 98052 (US)
(74) Representative: Grünecker, Kinkeldey, Stockmair & Schwanhäusser Anwaltssozietät

(57) **Abstract**

A data organization system that utilizes associations, pointers and/or links in connection with novel container types is provided. A "list" is a container of items, like a folder, but is different in that a file or other data component can be accessed *via* multiple lists (whereas an item must appear in exactly one folder). Additionally, lists can be arranged in an arbitrarily complex graph of relationships. The items in a list can be chosen arbitrarily by the user (or by a software program) and need not have any properties in common. A "dynamic list" is a collection of file identifiers that can be built and maintained automatically by the system. The backbone of a dynamic list is a query. In operation, the system can execute a query against the file store or other data store to create or modify the list. Accordingly, associations that reference the resulting files are added to or modified in the dynamic list.

## Description

### CROSS-REFERENCE TO RELATED APPLICATIONS

This application claims benefit under 35 U.S.C. § 119(e) from U.S. Provisional Patent Application Serial No. _____entitled Interaction of Static and Dynamic Data Sets and filed on October 9, 2004, the entirety of this application of which is incorporated herein by reference.

### TECHNICAL FIELD

This invention is related to computer systems and more particularly to a system and method to efficiently and comprehensively organize data by dynamically creating and/or maintaining associations to files or other types of data retained within a data store or file system.

### BACKGROUND OF THE INVENTION

With the technological advances in computing systems and more particularly in the organization of data related to file management systems, there is an ongoing and increasing need to implement comprehensive mechanisms to dynamically organize and/or manage data. Moreover, there is an ongoing and increasing need for new and innovative techniques for dynamically employing association identifiers to data within the operating system environment. These techniques can increase the comprehensibility and efficiency of operating and storage systems.

Modem desktop computer systems employ a structure of hierarchical and nested containers (*e.g*., directories or folders) as the primary organizational mechanism. The hierarchical containers are structured such that data component(s) (*e.g*., file(s)) are physically stored in connection with a specified container. As a result, it is not possible to retain or access the identical file *via* multiple containers. In as much as it is desired that these containers be used for meaningful categorization, the inability to access an item in multiple containers makes it impossible to accurately file an item having multiple appropriate categorizations. Users typically circumvent this limitation by making duplicates of the item to be filed and storing said duplicates in additional containers as desired. This technique presents two obvious problems. First, because files are identified by their file name together with their location, updating or modifying the file in one container does not dynamically update and/or modify the file in all containers having a copy of the subject file. Second, retention of multiple copies of the same file consumes valuable memory and/or storage space.

By contrast, web pages are defined by a uniform resource locator (URL). More particularly, a URL is an address that defines the route to (e.g., points to) a file on the web or any other network facility. In order to access a web page, a browser can be employed whereby a user could enter a desired URL into the browser thus navigating to the appropriate page. As well, URLs can be embedded within the web pages to provide a hypertext link to other pages.

The URL can contain the protocol prefix, port number, domain name, subdirectory names and file name. Port addresses are generally defaults and are rarely specified. To access a home page on a web site, only the protocol and domain name are required. For example, http://www.abccompany.com could retrieve the home page at The ABC Company's web site. In this example, the "http" is the web protocol, and www.abccompany.com is the domain name.

If the page is stored in another directory, or if a page other than the home page is required, slashes are used to separate the names. Like path names in a common operating system, subdirectories can be several levels deep. For example, the components of the following hypothetical URL are described below: http://www.abccompany.com/clothes/shirts/formal.html. In this example, "clothes/" is a first level subdirectory name. Likewise, "shirts/" is a second level subdirectory name and "formal.html" is the document name or target web page name.

As with general data files, web pages are deficient because access to them is dependent upon their location. More particularly, if a web page is moved from one location to another, it would be rendered inoperable. Moreover, conventional operating systems do not retain or have access to specific knowledge of the structure of a web page. Although attempts have been made to recover this knowledge of the web page structure, the attempts have been error prone and unsuccessful because web pages can be structured arbitrarily and can include custom codes. Thus, all links may not be discoverable.

Therefore, there is a substantial unmet need to provide a system and/or methodology that provides for an organization technique based upon associations, pointers and/or links. Core constructs can be provided for building lists in such a way that the discovery process is trivial in connection to determining the structure of the list. Likewise, the semantics can be built into the mechanisms. Additionally, there is an unmet need for a system that dynamically updates the associations, pointers and/or links thus providing a more comprehensive and versatile mechanism of organizing data.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Modem operating systems provide a folder or directory mechanism, which allows users to organize their files into a hierarchy of nested containers. The subject invention, in various aspects thereof, is directed to a new file system and/or methodology of data organization that includes "list" and "dynamic list" container types. With respect to aspects of the invention, these two additional container types are introduced having novel functionality.

In accordance with the subject invention, the "list" is a container of items, similar to a folder, but is different in that a file or other data component can appear in any number of lists (whereas an item must appear in exactly one folder). As a result, lists can be arranged in an arbitrarily complex graph of relationships. The items in a list can be chosen arbitrarily by the user (or by a software program) and need not have any properties in common. The "dynamic list" is a collection of files or data components that can be built and maintained automatically by the system for the user. The backbone of a dynamic list is a query. In operation, the system can execute a query against the file store and associations that reference the resulting files are added to the dynamic list. If a file changes so that it no longer matches the query, it is removed from the dynamic list. Because each container type has a unique functional role, and they are otherwise interoperable, users may combine them to create a more flexible and powerful organization than is possible in a storage system that uses only folders.

The subject invention disclosed and claimed herein, in one aspect thereof, is directed to a novel system that facilitates organizing data. The system includes an association store component that includes any number of association components. The association components relate to one or more data components. The system further includes an association manager that dynamically maintains the relationships based upon a property (*e.g*., location) of the data components.

In another aspect, the system can include an association manager having a query component that generates a query in connection with determining a property (*e.g*., condition, state) of the data components. In accordance thereto, the association manager component can update the association components based upon the determined property. The query component can be employed in connection with interrogating the data components based upon a condition as a function of the property.

In order to facilitate the interrogation, the query component can include rule-based mechanisms. More particularly, a rule engine component can be included that automatically instantiates a rule to implement a predefined criteria. Further, a rule evaluation component can be provided that applies the rule with respect to the one or more data components to update the one or more association components. In addition to, or in replace of, the rule-based mechanisms, the query component can employ artificial intelligence (AI) mechanisms to automatically infer and/or predict a user intention as a function of historical and/or statistical criteria.

In an alternative aspect, an analyzer component can be provided to facilitate maintaining association relationships by verifying the integrity of a relationship. The analyzer component can employ any decision making technique known in the art including, but not limited to, rule and AI-based decision making mechanisms while checking the integrity of the association(s). Additionally, the analyzer component can generate a prompt to alert a user of a change in the integrity of a data component with respect to an association.

To the accomplishment of the foregoing and related ends, certain illustrative aspects of the invention are described herein in connection with the following description and the annexed drawings. These aspects are indicative, however, of but a few of the various ways in which the principles of the invention can be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a general component block diagram of a system that generates an association in accordance with an aspect of the subject invention.

FIG. 2 illustrates an exemplary flow chart of procedures to create an association in accordance with a disclosed aspect.

FIG. 3 illustrates a general block diagram that illustrates an exemplary association between lists and files in accordance with an aspect of the subject invention.

FIG. 4 illustrates a general block diagram that illustrates an exemplary association between lists, files and folders in accordance with an aspect of the subject invention.

FIG. 5 illustrates a general component block diagram of a system for generating an association utilizing a query component in accordance with an aspect of the subject invention.

FIG. 6 illustrates a general component block diagram of a system for generating and maintaining an association utilizing a query and analyzer component in accordance with an aspect of the subject invention.

FIG. 7 illustrates an exemplary user interface that facilitates an aspect of the subject invention.

FIG. 8 illustrates a network architectural diagram that exemplifies the dynamic list and query component in accordance with an alternate aspect of the subject invention.

FIG. 9 illustrates a query component including rule-based mechanisms in accordance with an aspect of the invention.

FIG. 10 illustrates a query component including artificial intelligence-based mechanisms in accordance with an aspect of the invention.

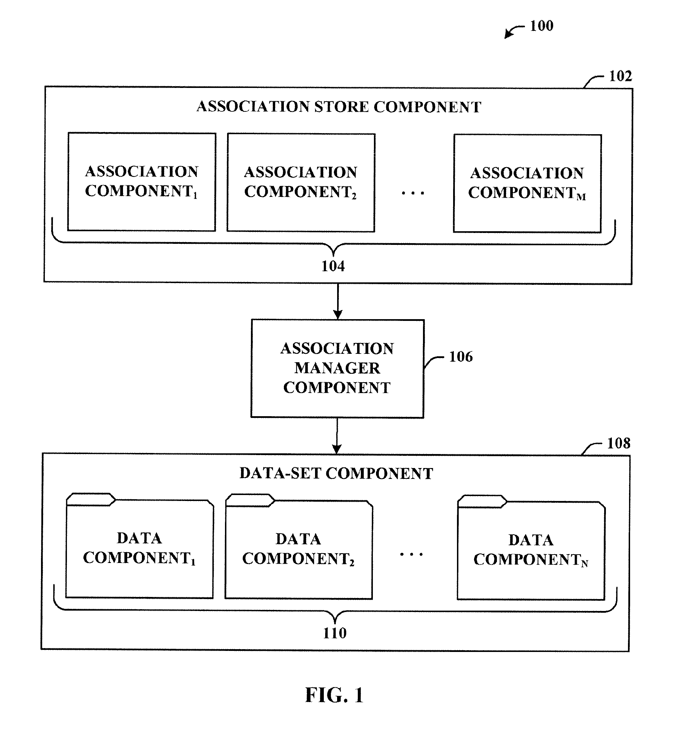

FIG. 1 illustrates an analyzer component including rule-based mechanisms in accordance with an aspect of the invention.

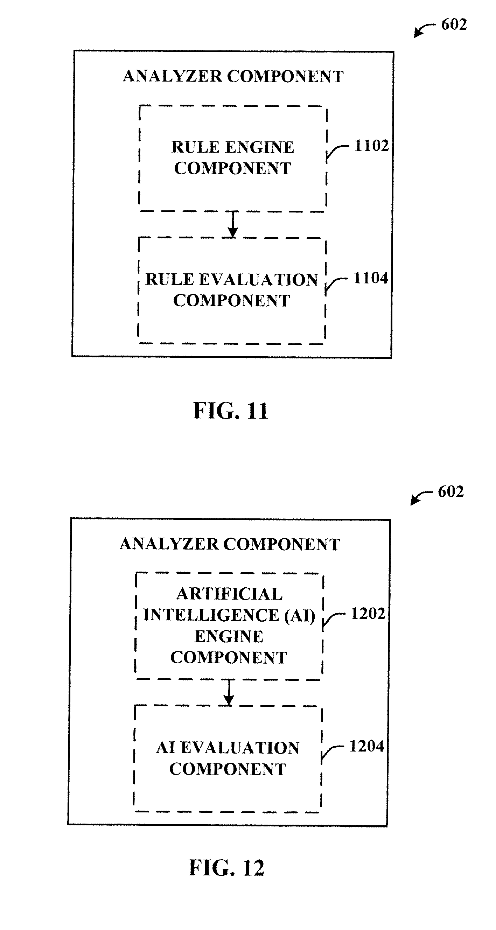

FIG. 12 illustrates an analyzer component including artificial intelligence-based mechanisms in accordance with an aspect of the invention.

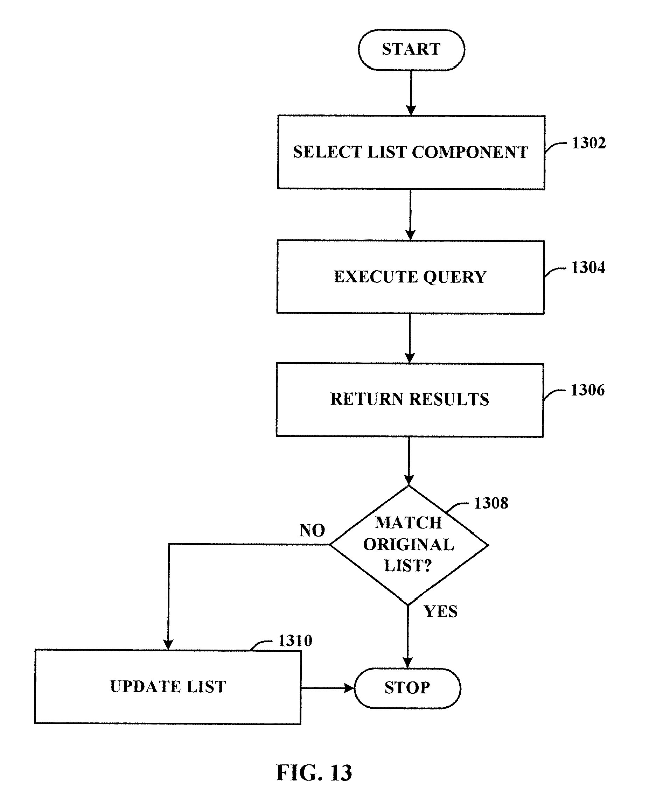

FIG. 13 illustrates an exemplary flow chart of procedures to create and maintain an association in accordance with a disclosed aspect.

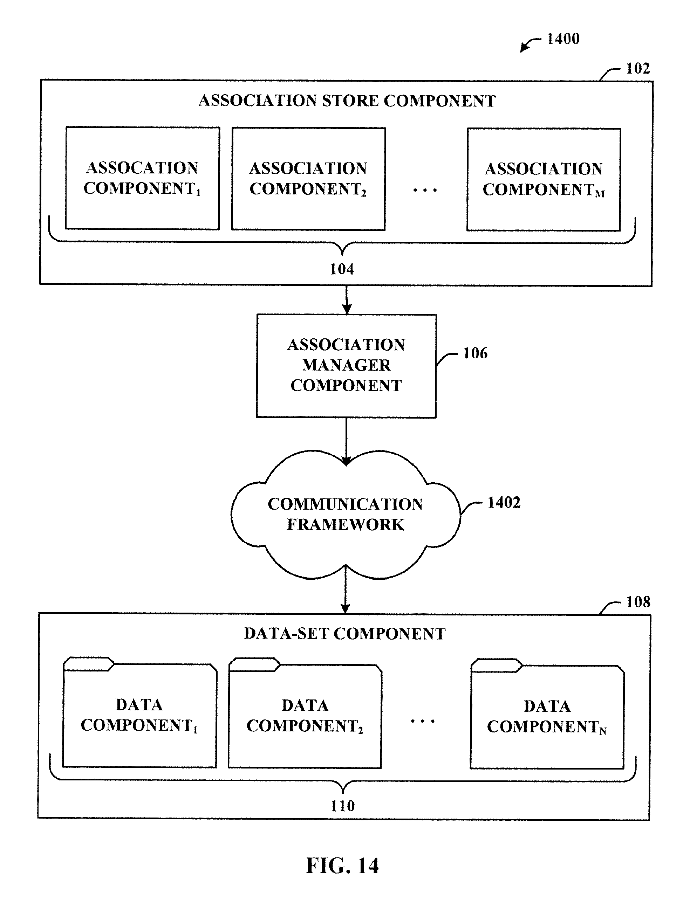

FIG. 14 illustrates a component diagram of an exemplary computing environment in accordance with an aspect of the subject invention.

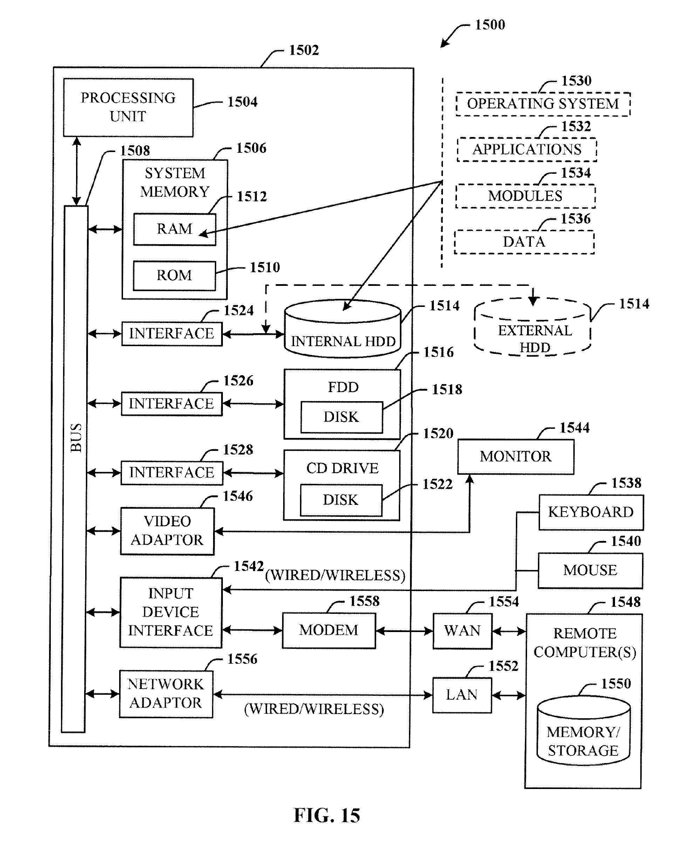

FIG. 15 illustrates a block diagram of a computer operable to execute the disclosed architecture.

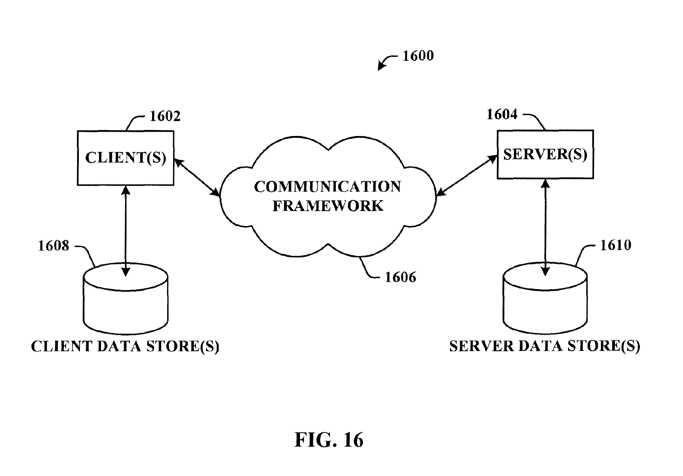

FIG. 16 illustrates a schematic block diagram of an exemplary computing environment in accordance with the subject invention.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention can be practiced without these specific details. In other instances, well-known structures and devices are shown in block diagram form in order to facilitate describing the subject invention.

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data.
Such inference results in the construction of new events or actions from a set of observed events and/or stored event data, whether or not the events are correlated in close temporal proximity, and whether the events and data come from one or several event and data sources.

As discussed *supra,* well-known operating systems employ a folder or directory technique that allows users to organize and access files into a hierarchy of nested containers. In other words, the folder and directory mechanisms are directed to techniques whereby data is physically arranged into a hierarchical, nested and/or tree-like structure. By contrast, that subject invention introduces novel container types (e.g., list and dynamic list) based upon mapping and other association techniques.

A "list" can be a container of mapping identifiers (e.g., associations). In contrast to a folder, a single file can be referenced and accessed in any number of lists. As well lists can be arranged in an arbitrarily complex graph of relationships. The items (e.g., identifiers) in a list can be chosen arbitrarily by the user or other application (e.g., software program) and need not have any properties in common.

A "dynamic list" can be a collection of files that is built and maintained automatically by the system for the user. Dynamic lists can be based on queries. In other words, the system can execute a query against a file store whereby identifiers associated to the resulting files are added to the dynamic list. In accordance with the query operation, if a characteristic of the data component changes, the association to such a data component can be updated, modified or removed from the dynamic list. By way of example, if a data component changes whereby it no longer matches the results of the query, the system can dynamically and/or automatically update the list to reflect the changes. Aspects of the subject invention directed to the "list" and "dynamic list" are discussed in detail *infra.*

In addition to the general functionality of the "list" and "dynamic list", the subject invention, in various aspects thereof, provides for a system and/or methodology that enables combinations of container types. By way of example, a list can contain identifiers corresponding to folders and dynamic lists. Alternatively, a folder can contain lists and dynamic lists. Further, a dynamic list can contain identifiers to folders and lists. Although the subject invention is directed to the association of a list and/or dynamic list to electronic data components, it is to be appreciated that lists and dynamic lists can include associations to any type of data components, or combination thereof, known in the art.

Because each container type (e.g., list, dynamic list, folder, directory) has a unique functional role, and they are otherwise interoperable, the subject invention permits users to combine container types to create a more flexible and powerful organization than is possible in a storage system that solely employ folders and directories. In accordance with the invention, an individual data component can be referenced *via* multiple containers (*e.g*., lists). By way of example, a single "project budget" file can appear in multiple lists: one corresponding to the project referenced and another consisting of all recent budgets. The same data component can also appear in a dynamic list of "all budgets that have changed in the last two days." This dynamic list can be automatically updated as a user manipulates files over time. It will be appreciated that in all three exemplary scenarios, only one copy of the project budget is maintained in the file store.

In accordance with aspects of the subject invention, association containers (e.g., lists) can be established whereby a container can be represented by a set of virtual association components (e.g., identifiers). Each association component can be linked to and/or point to a defined data component. The data component can be stored in a data-set component or file system in any arbitrary location. Although a single data-set component is discussed in connection with the disclosed aspects, it will be appreciated that data components referenced in any single list can be stored in disparate data-sets, file systems or noncontiguous storage locations.

Referring now to FIG. 1, there is illustrated a schematic representation of an aspect of a system 100 that facilitates organization of and/or interaction of data sets in accordance with the subject invention. Generally, the system 100 can include an association store component 102 having association components 104 therein. Further, the system 100 can include an association manager component 106 and a data-set component 108 having data components 110 therein.

The association store component 102 can include association components 1 to M, where M is an integer. Association components 1 to M can be referred to collectively or individually as association components 104 as illustrated. In accordance with aspects of the subject invention, association component 104 can employ any data association technique known in the art. By way of example, association component(s) 104 can include, but are not intended to be limited to, links, hyperlinks, drive mapping, pointers or the like.

The data-set component 108 can include data components 1 to N, where N is an integer. Data components 1 to N can be referred to collectively or individually as data components 110 as illustrated. In accordance with aspects of the invention, data component(s) 110 can include any type of electronic item, record, file, document, link, container or the like. Additionally, data components 110 can include any grouping or associations (e.g., container) of individual data elements. By way of example, data component 110 can be a file that represents a word processing document. In an alternate embodiment, data component 110 can be a link or hyperlink which points or links to a remotely stored data file. In yet another aspect, data component 110 can represent an association or a grouping of associations (e.g., list) or a compilation of data elements (e.g., folder). Those skilled in the art will appreciate that the data-set component 108 can include any number of data components 110 of the same or different types.

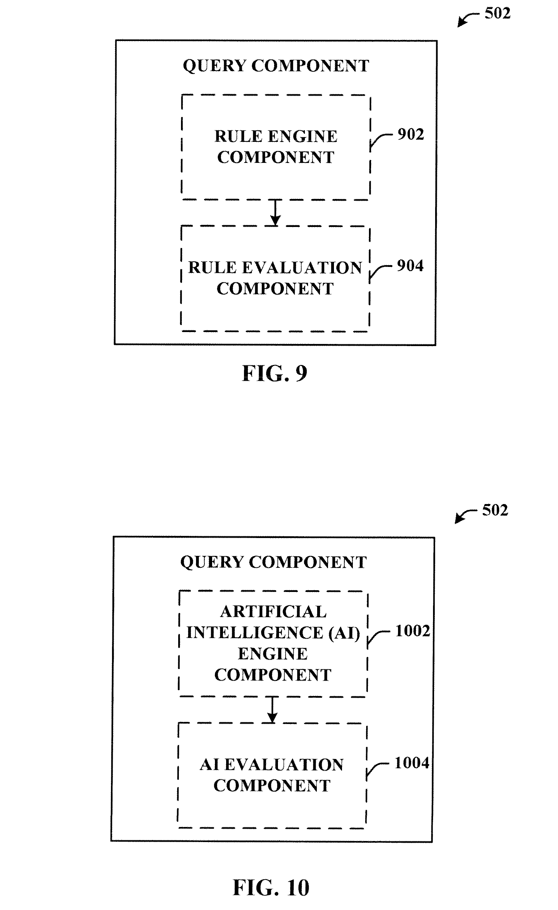

The association manager component 106 can effect and manage relationships between the association components 104 and the data components 110. By way of example, the association manager component 106 can verify the integrity of a relationship and, if appropriate, dynamically maintain a relationship between a particular association component 104 and data component 110. If appropriate, the association manager component 106 can update, modify and/or delete an association component 104 to reflect a change in relationship(s). In alternative aspects and by way of further example, the association manager component 106 can be configured with a decision-making mechanism in the form of a rule engine whereby a rule can be applied to the association component 104 thus effecting an interrogation of the relationship(s) with data component(s) 110. In an alternate embodiment, an artificial intelligence (AI) component can be employed individually or in combination with other evaluation schemes in order to effect interrogation based an inference of a user intention with respect to the association component(s) 104. These alternative aspects will be described in greater detail with respect to FIGS. 9 to 12 *infra.*

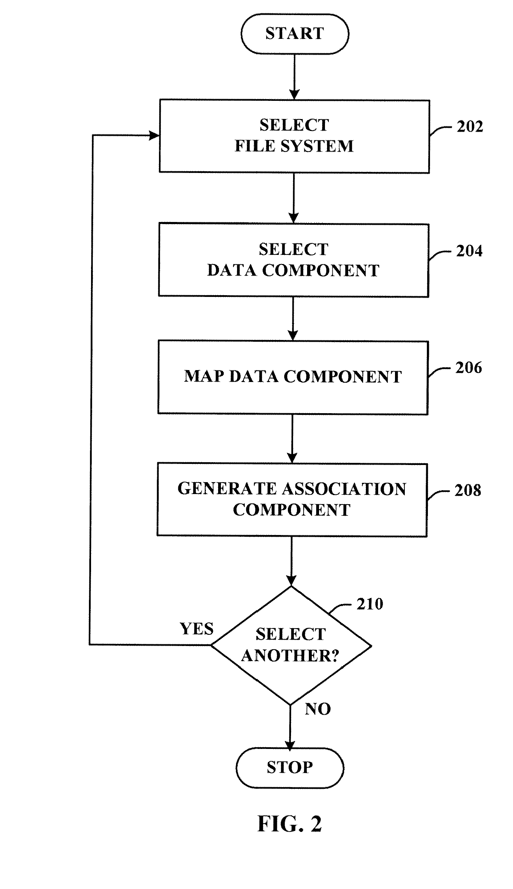

With reference to FIG. 2, there is illustrated a flowchart in accordance to an aspect of the subject invention. While, for purposes of simplicity of explanation, the one or more methodologies shown herein, e.g., in the form of a flow chart, are shown and described as a series of acts, it is to be understood and appreciated that the subject invention is not limited by the order of acts, as some acts may, in accordance with the subject invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the subject invention.

Referring again to FIG. 2 and proceeding to 202, a file system or data store is selected. At 204 the desired data components can be selected to initiate the establishment of an association. Once selected, at 206, the selected data component is mapped to determine relevant data (e.g., location) to generate a corresponding association component. At 208, an association component is generated which relates to the selected data component. At 210, the system can prompt to determine if another data component is desired to be added to the association list. If so, the system returns to 202 whereby the additional data component can be selected. It is contemplated that, as illustrated, the system can enable a user to select an alternate file system location for the additional data component(s) by returning to 202. In other words, in accordance with the subject system/methodology, a list can include data components that reside in multiple locations (e.g., disparate file systems). If at 210 another data component is not desired, the methodology is complete.

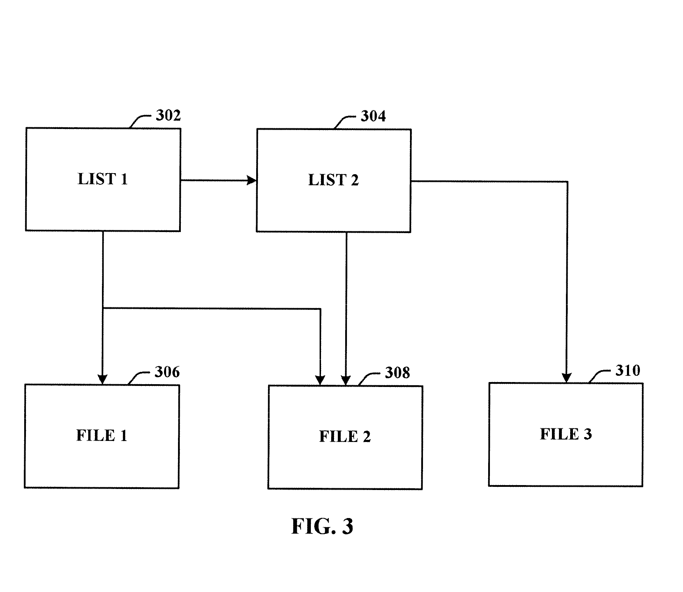

FIG. 3 illustrates an exemplary relationship between lists and electronic files. While this exemplary aspect depicts a defined number and type of data components and/or containers, it will be appreciated that any number of data components and/or types of containers can be employed without departing from the scope and functionality of the subject invention. With reference to FIG. 3, two disparate lists are shown: LIST 1 (302) and LIST 2 (304). As discussed *supra,* because a list effectively includes a link and/or pointer to a data component, it is possible for a single data component to be referenced and therefore accessible *via* multiple lists. By way of example, and with reference to FIG. 3, FILE 1 (306) is only accessible *via* LIST 1 (302). However, as shown, FILE 2 (308) is accessible *via* both LIST 1 (302) and LIST 2 (304). Further, as previously discussed, LIST 1 (302) includes an association to LIST 2 (304) as an individual list member. In other words, although, FILE 3(310) is not directly accessible *via* LIST 1(302), it can be accessed since as it appears in LIST 2(304), which, as illustrated, is associated to LIST 1 (302).

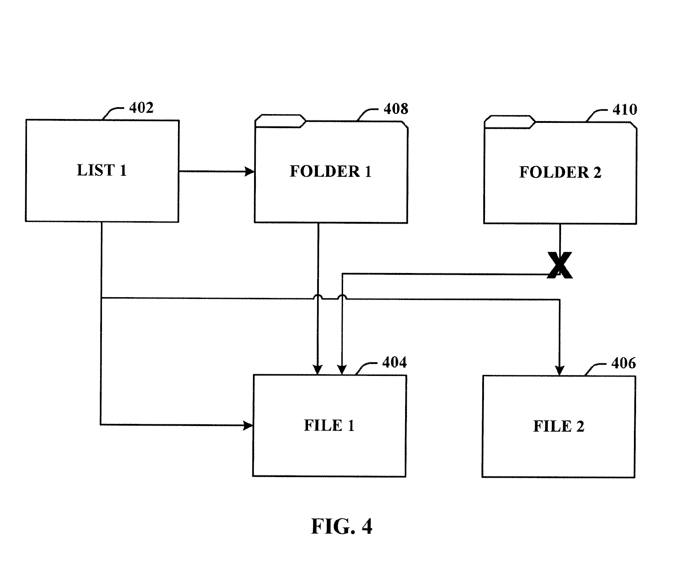

FIG. 4 illustrates another exemplary relationship between lists, electronic files and folders. As illustrated, LIST 1 (402) can include a reference to FILE 1 (404), FILE 2 (406) and FOLDER 1 (408). As previously noted, although FOLDER 1 (408) includes a copy of FILE 1 (404), an additional copy of the file is not retained in accordance with the subject system. As discussed *supra,* in accordance with the association contained within LIST 1 (402), the system maps the location of FILE 1 (404) thus determining its location as being FOLDER 1(408). For this reason, only a single copy will have to be retained while access can be effected *via* multiple sources: LIST 1 (402) and FOLDER 1 (408). It will be appreciated that conventional systems do not permit a single copy of a data component to reside in multiple folders. Rather, conventional systems require a copy of the data component to be created and subsequently stored in a disparate location. With reference to FIG. 4, FILE 1 (404) cannot reside in FOLDER 1 (408) and FOLDER 2 (410) simultaneously. This prohibition is denoted with an "X" in FIG. 4.

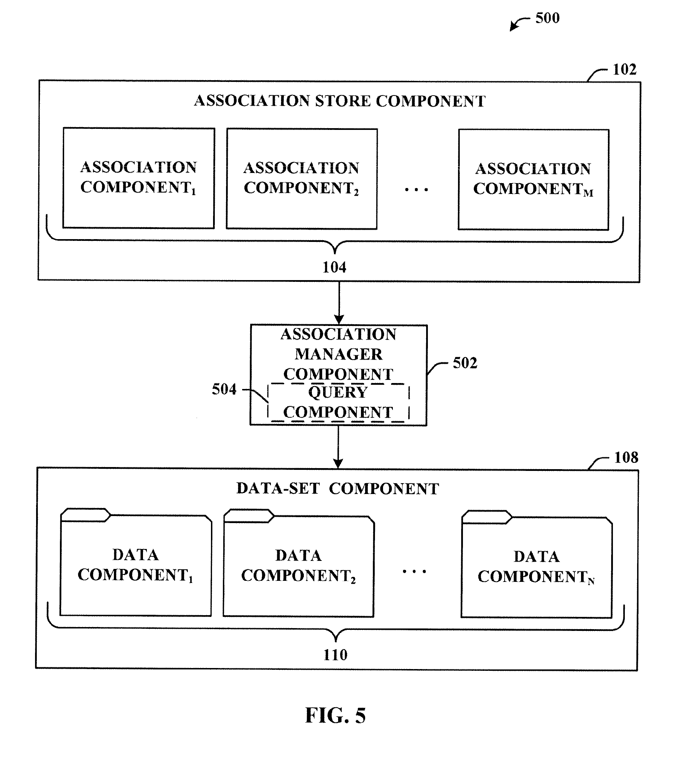

Referring now to FIG. 5, there is illustrated a schematic representation of an alternate aspect of a system 500 that facilitates organization of and/or interaction of data sets in accordance with the subject invention. Generally, the system 500 can include an association store component 102 having association components 104 therein. Further, the system 500 can include an association manager component 502 and a data-set component 108 having data components 110 therein. It is to be appreciated that the association store component 102 and the data-set component 108 are as described with reference to FIG. 1 *supra.*

As described with reference to FIG. 1, the association store component 102 can include association components 1 to M, where M is an integer. Association components 1 to M can be referred to collectively or individually as association components 104. In accordance with aspects of the subject invention, association component 104 can employ any data association technique known in the art. By way of example, association component(s) 104 can include, but are not intended to be limited to, links, hyperlinks, drive mapping, pointers or the like.

Moreover, the data-set component 108 can include data components 1 to N, where N is an integer. Data components 1 to N can be referred to collectively or individually as data components 110 as illustrated. In accordance with aspects of the invention, data component(s) 110 can include any type of electronic item, record, file, document, link or the like. Additionally, data components 110 can include any grouping or associations (e.g., containers) of individual data elements. By way of example, data component 110 can be a file that represents a word processing document. In an alternate embodiment, data component 110 can be a link or hyperlink which points or links to a remotely stored data file. In yet another aspect, data component 110 can represent an association or a grouping of associations *(e.g.,* list) or a compilation of data elements *(e.g.,* folder). Those skilled in the art will appreciate that the data-set component 108 can include any number of data components 110 of the same or different types.

Similar to the discussion *supra,* the association manager component 502 can be employed to establish and manage relationships between the association components 104 and the data components 110. By way of example, the association manager component 502 can verify the integrity of a current relationship and, if appropriate, dynamically maintain the relationship between a particular association component 104 and data component 110. If appropriate, the association manager component 502 can update, modify and/or delete an association component 104 to reflect a change in the relationship(s).

In accordance with an exemplary "dynamic list" aspect and with reference to FIG. 5, it is illustrated that association manager component 502 can include a query component 504 that assists in the establishment and update of associations. In operation, the query component 504 can be employed to determine a state of a current association. For example, the query component 504 can be employed to determine if a specific target data component is still available. If the query component 504 determines that the target component is still available, no change is made in the associations. If however, the target component is not available, the association manager component 502 can modify and/or update the association store component 102 to reflect such lack of availability (e.g., delete or change an association component 104).

In an alternate aspect, the association manager component 502, *via* the query component 504, can be configured to employ an inquiry to establish the association components 104. By way of example, suppose a user is interested in accessing image files created during a specific time period. In this exemplary situation, a "dynamic list" can be generated whereby the query component 502 can be employed to access the data-set component 108 and identify specific data components 110 that meet the predefined criteria or query (e.g., image files created during a specific time span).

As discussed with reference to FIG. 1, in alternative aspects and by way of further example, the association manager component 502, and query component 504, can be configured with a decision-making mechanism in the form of a rule engine whereby a rule can be applied thus effecting an interrogation of the relationship(s) with data component(s) 110. As well, such decision-making mechanisms can be employed to generate a query of a data-set component. In an alternate embodiment, an AI component can be employed individually or in combination with other evaluation schemes in order to effect interrogation based on an inference of a user intention with respect to the association component(s) 104. These alternative aspects will be discussed in greater detail with respect to FIGS. 9-12 *infra.*

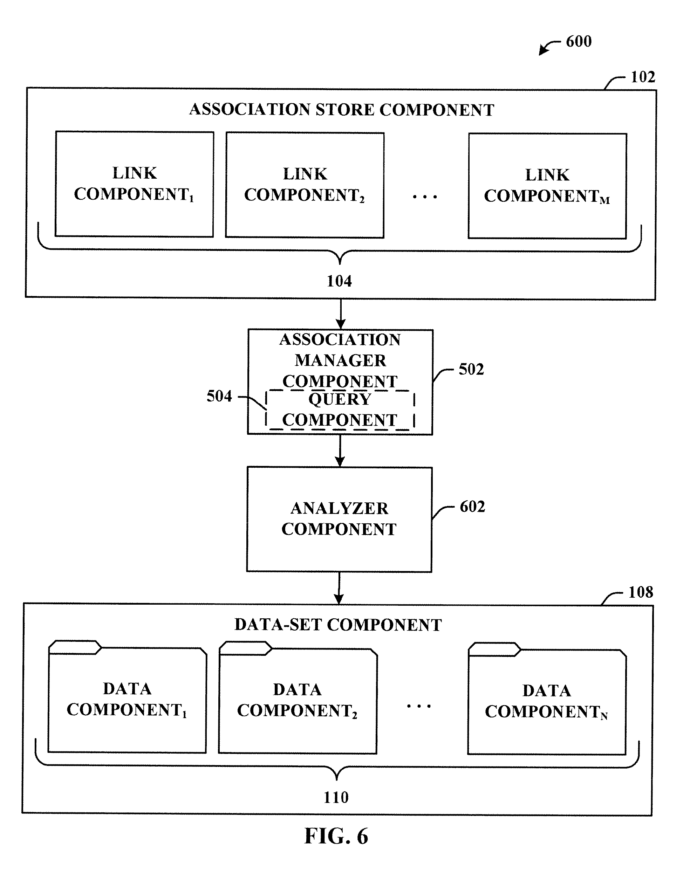

FIG. 6 illustrates yet another aspect of the subject invention. Generally, system 600 can include an association store component 102, an association manager component 502 and a data-set component 108. These components (102, 502, 108) have the same or similar functionality as described with reference to FIG. 5. In addition, the system 600 includes an analyzer component 602. The analyzer component 602 can be employed to verify the integrity of the association components 104. In other words, the analyzer component 602 can facilitate authentication and/or confirmation of the integrity of the relationship between the association components 104 and the corresponding data component(s) (110). In accordance thereto, if the analyzer component 602 detects a change in the integrity of the association, the association manager component 502 can update, modify or delete the subject association component 104 accordingly. If no change in the integrity of the association(s) is detected by the analyzer component 602, the corresponding association component(s) 104 remain unchanged.

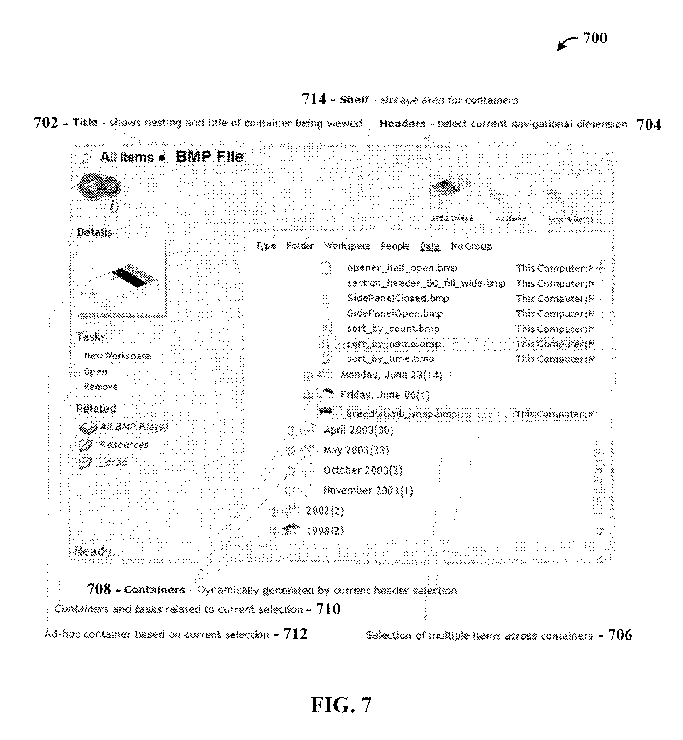

FIG. 7 illustrates an exemplary UI 700 that facilitates employing an aspect of the subject invention. As illustrated, a title 702 is illustrated that identifies a particular nesting and title of a container viewed. Headers 704 provide navigational dimension within the UI. By way of example, a chronological sort can be provided (*e.g*., *via* Date) as shown. Other navigational dimensions can be provided including, but not limited to, by Type, Folder, Workspace, People, No Group or the like.

Selection of desired data components can be effected in any manner (e.g., manual or automatic). It is to be appreciated, that as indicated at 706, selection of multiple items across containers can be effected in accordance with the subject invention. It should be noted that the GUI of FIG. 7 can provide a thumbnail or other representation of containers 308 that are dynamically generated by the current header selection. As well, representations of containers and tasks 710 related to the current selection can be provided by the GUI 700.

Additionally, an ad-hoc container 712 based upon the current selection can be provided. It is to be understood that the representation of containers (*e*.*g*., 708, 712) in accordance with the subject invention can be arranged in any desired manner. For example, and as illustrated in FIG. 7, ad-hoc container representation 712 can be provided in the form of a thumbnail which depicts a stack of data elements having the most recent document displayed on the top of the stack. It is to be appreciated that any representation can be utilized without departing from the scope and functionality of the claimed invention. Once persisted, the thumbnail images of the container(s) can be displayed on a shelf 714 which can be a representation of a storage area for the container(s).

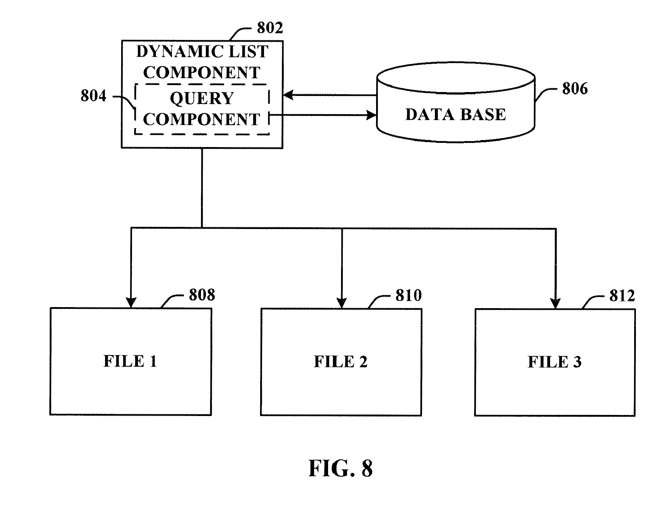

As previously described with reference to FIG. 6, a "dynamic list" can employ a query to identify associations. To provide further context to the dynamic list mechanism, FIG. 8 illustrates an exemplary aspect that employs a query component to identify and associate data components. Turning now to FIG. 8, dynamic list component 802 can include a query component 804. In this aspect and based upon a defined parameter or set of parameters, the dynamic list 802 can employ the query component 804 to identify a data component or set of data components that match a subject query. In operation, the dynamic list component 802, *via* the query component 804 can interrogate a database 806 in accordance with a set of defined parameters. In response thereto, data components or files (*e.g*., 808, 810, 812) that match the subject query can be identified. Next, the dynamic list component can map and thereby establish association components (not shown) in order to effect access the identified data components (*e.g*., 808, 810, 812).

By way of further example, as previously discussed, suppose a user is interested in accessing "all budgets modified in past two days." The query component 804 can be employed to access the data base 806 and, in turn, return files (*e.g*., 804, 808, 810) that match such a query. As previously discussed, the query component 804 and/or the analyzer component (FIG. 6) can employ alternative decision-making techniques. More particularly, rule and/or artificial intelligence-based techniques can be used in connection with automating aspects of the query and/or analyzer components. These alternative aspects are discussed in more detail with reference to FIGS. 9-12.

With reference now to FIG. 9, an alternate aspect of query component 502 (FIG. 5) is shown. More particularly, query component 502 generally includes a rule engine component 902 and a rule evaluation component 904. In accordance with this alternate aspect, an implementation scheme (e.g., rule) can be applied to define and/or implement a query. It will be appreciated that the rule-based implementation can automatically and/or dynamically define and implement a query of a data store. In response thereto, the rule-based implementation can select data component(s) included within the result(s) by employing a predefined and/or programmed rule(s) based upon any desired criteria (e.g., file type, file size, hardware characteristics).

By way of example, a user can establish a rule that can implement a query of a preferred type of file (*e.g.*, music). In this exemplary aspect, the rule can be constructed to select all music files from a targeted data store or source location. Accordingly, a result set of data components can be obtained, previewed and/or manipulated as desired. Once finalized, a container (e.g., dynamic list) can be generated and stored in a desired location and/or device. It will be appreciated that any of the specifications utilized in accordance with the subject invention can be programmed into a rule-based implementation scheme.

In the exemplary aspect of FIG. 9, the rule engine component 902 can be programmed or configured in accordance with a user-defined preference. As well, a rule can be established in accordance with a specific hardware configuration or in accordance with a software application. For example, a rule can be constructed in accordance with specific memory capacity and/or display of a device. In other words, as previously discussed, a rule can be established to take into consideration the specific limitations of a hardware device (*e.g*., display mechanism). Thus, in one aspect, if a specific handheld device has low memory capacity, a rule can be generated to ignore and not associate files exceeding a predefined size threshold.

The rule evaluation component 904 facilitates application of the rule. Based upon the output of the rule evaluation component 904, the query component 502 can return the results thus effecting establishment of appropriate associations by the dynamic list component as discussed *supra.*

A schematic diagram of another alternative aspect of the query component 502 is illustrated in FIG. 10. In addition to or in replace of the rule-based components described with reference to FIG. 9, the query component 502 can include an artificial intelligence (AI) engine component 1002 and an AI evaluation component 1004.

In accordance with this aspect, the optional AI engine and evaluation components 1002, 1004 can facilitate automatically configuring and/or implementing various aspects of the query component 502. The AI components 1002, 1004 can optionally include an inference component (not shown) that can further enhance automated aspects of the AI components utilizing, in part, inference based schemes to facilitate inferring intended actions to be performed at a given time and state. The AI-based aspects of the invention can be effected *via* any suitable machine-learning based technique and/or statistical-based techniques and/or probabilistic-based techniques.

In the alternate aspect, as further illustrated by FIG. 10, the subject query component 502 (*e.g*., in connection with defining parameters, filtering results) can optionally employ various artificial intelligence based schemes for automatically carrying out various aspects thereof. Specifically, an artificial intelligence engine and evaluation components 1002, 1004 can optionally be provided to implement aspects of the subject invention based upon artificial intelligence processes *(e.g.,* confidence, inference). For example, a process for determining the members of a dynamic list *(e.g.,* data component(s)) based upon contents of a data store and target device type can be facilitated *via* an automatic classifier system and process. Further, the optional artificial intelligence engine and evaluation components 1002, 1004 can be employed to facilitate an automated process of querying in accordance with hardware specifications whereby data files corresponding to a specific type can be associated to a particular container (*e.g*., list) so long as particular parameters are met.

A classifier is a function that maps an input attribute vector, x =(x1, x2, x3, x4, *xn),* to a confidence that the input belongs to a class, that is, f(x) *= confidence(class).* Such classification can employ a probabilistic and/or statistical-based analysis *(e.g.,* factoring into the analysis utilities and costs) to prognose or infer an action that a user desires to be automatically performed. In the case of data component association, for example, attributes can be file types or other data-specific attributes derived from the file types and/or contents, and the classes can be categories or areas of interest.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, and probabilistic classification models providing different patterns of independence can be employed. Classification as used herein also is inclusive of statistical regression that is utilized to develop models of priority.

As will be readily appreciated from the subject specification, the invention can employ classifiers that are explicitly trained (*e.g., via* a generic training data) as well as implicitly trained (*e.g*., *via* observing user behavior, receiving extrinsic information). For example, SVM's can be configured *via* a learning or training phase within a classifier constructor and feature selection module. In other words, the use of expert systems, fuzzy logic, support vector machines, greedy search algorithms, rule-based systems, Bayesian models (e.g., Bayesian networks), neural networks, other non-linear training techniques, data fusion, utility-based analytical systems, systems employing Bayesian models, *etc.* are contemplated and are intended to fall within the scope of the hereto appended claims.

Other implementations of AI could include alternative aspects whereby based upon a learned or predicted user intention, the system can prompt for additional inclusions into an association store. Likewise, an optional AI component could prompt a user to delete an item from a collection (*e.g*., dynamic list). Moreover, AI can be used to search for commonality of files or other data components.

FIGS. 11 and 12 illustrate similar rule-based and AI-based components as discussed *supra* as applied to an analyzer mechanism. The alternative analyzer component 602 employs a rule engine component 1102 and a rule evaluation component 1104. Similarly, FIG. 12 illustrates an alternate aspect of an analyzer component 602 that employs AI-decision based mechanisms (1202, 1204). More particularly, FIG. 12 illustrates an AI engine and evaluation components included within an analyzer component 602. It is to be appreciated that the rule-based and AI-based decision making mechanisms shown in connection with automating the analyzer component of FIGS. 11 and 12 have the same and/or similar functionality as those described *supra* with reference to FIGS. 9 and 10.

With reference now to FIG. 13, a flow chart in accordance with an aspect of the subject invention is shown. Specifically, the flow chart illustrates an exemplary methodology of the query and analyzer processes in connection with creating and/or maintaining *(e.g.,* updating, modifying) a dynamic list. At 1302, a specific list component is selected. It is to be understood that the exemplary methodology assumes an existing list has been created at an earlier time. Next at 1304, a query is executed on a target file system or data store. As earlier described, the query can be based upon a user defined criteria and/or, alternatively, a rule and/or AI-based criteria.

At 1306 the results of the query are returned and matched against the original list (e.g., associations) at 1308. If at 1308, a determination is made that the returned results do not match the original list, the list is updated at 1310 to reflect any updates, modifications and/or deletions to the list in accordance with the query results. If, on the other hand, the results match the original query, the list is not updated as illustrated in FIG. 13.

Referring to FIG. 14, a schematic block diagram of an exemplary computing environment is shown in accordance with an aspect of the subject invention. Specifically, the system 1400 illustrated includes an association store component 102 having association components 104 contained therein. Further, the system 1400 includes an association manager component 106 and a data-set component 108 having data components 110 therein. These components can have the same functionality as discussed in detail *supra* with reference to FIG. 1. Additionally, the system 1400 illustrated employs a communication framework 1402 whereby the association store component 102 and/or the association manager component 106 can be remote from the target data (*e*.*g*., data-set component 108).

By way of example, suppose a portable device (e.g., MP3-compatible player) houses the association components 102, 104, 106. It will be appreciated that a list could be persisted on the portable device whereby, the actual data (e.g., data-set component 108) can be accessed *via* wired or wireless mechanisms (e.g., communications framework 1402). Communications framework 1402 can employ any communications technique (wired and/or wireless) known in the art. For example, communications framework 1402 can include, but is not limited to, Bluetooth^{™}, Infrared (IR), Wi-FI, Ethernet, or the like.

Referring now to FIG. 15, there is illustrated a block diagram of a computer operable to execute the disclosed architecture. In order to provide additional context for various aspects of the subject invention, FIG. 15 and the following discussion are intended to provide a brief, general description of a suitable computing environment 1500 in which the various aspects of the subject invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 15, there is illustrated an exemplary environment 1500 for implementing various aspects of the invention that includes a computer 1502, the computer 1502 including a processing unit 1504, a system memory 1506 and a system bus 1508. The system bus 1508 couples system components including, but not limited to, the system memory 1506 to the processing unit 1504. The processing unit 1504 can be any of various commercially available processors. Dual microprocessors and other multi-processor architectures may also be employed as the processing unit 1504.

The system bus 1508 can be any of several types of bus structure that may further interconnect to a memory bus (with or without a memory controller), a peripheral bus, and a local bus using any of a variety of commercially available bus architectures. The system memory 1506 includes read only memory (ROM) 1510 and random access memory (RAM) 1512. A basic input/output system (BIOS) is stored in a non-volatile memory 1510 such as ROM, EPROM, EEPROM, which BIOS contains the basic routines that help to transfer information between elements within the computer 1502, such as during start-up. The RAM 1512 can also include a high-speed RAM such as static RAM for caching data.

The computer 1502 further includes an internal hard disk drive (HDD) 1514 (*e.g*., EIDE, SATA), which internal hard disk drive 1514 may also be configured for external use in a suitable chassis (not shown), a magnetic floppy disk drive (FDD) 1516, (*e.g*., to read from or write to a removable diskette 1518) and an optical disk drive 1520, (*e.g*., reading a CD-ROM disk 1522 or, to read from or write to other high capacity optical media such as the DVD). The hard disk drive 1514, magnetic disk drive 1516 and optical disk drive 1520 can be connected to the system bus 1508 by a hard disk drive interface 1524, a magnetic disk drive interface 1526 and an optical drive interface 1528, respectively. The interface 1524 for external drive implementations includes at least one or both of Universal Serial Bus (USB) and IEEE 1394 interface technologies.

The drives and their associated computer-readable media provide nonvolatile storage of data, data structures, computer-executable instructions, and so forth. For the computer 1502, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the subject invention.
A number of program modules can be stored in the drives and RAM 1512, including an operating system 1530, one or more application programs 1532, other program modules 1534 and program data 1536. All or portions of the operating system, applications, modules, and/or data can also be cached in the RAM 1512. It is appreciated that the subject invention can be implemented with various commercially available operating systems or combinations of operating systems.

A user can enter commands and information into the computer 1502 through one or more wired/wireless input devices, e.g., a keyboard 1538 and a pointing device, such as a mouse 1540. Other input devices (not shown) may include a microphone, an IR remote control, a joystick, a game pad, a stylus pen, touch screen, or the like. These and other input devices are often connected to the processing unit 1504 through an input device interface 1542 that is coupled to the system bus 1508, but can be connected by other interfaces, such as a parallel port, an IEEE 1394 serial port, a game port, a USB port, an IR interface, *etc*.

A monitor 1544 or other type of display device is also connected to the system bus 1508 *via* an interface, such as a video adapter 1546. In addition to the monitor 1544, a computer typically includes other peripheral output devices (not shown), such as speakers, printers *etc*.

The computer 1502 may operate in a networked environment using logical connections *via* wired and/or wireless communications to one or more remote computers, such as a remote computer(s) 1548. The remote computer(s) 1548 can be a workstation, a server computer, a router, a personal computer, portable computer, microprocessor-based entertainment appliance, a peer device or other common network node, and typically includes many or all of the elements described relative to the computer 1502, although, for purposes of brevity, only a memory storage device 1550 is illustrated. The logical connections depicted include wired/wireless connectivity to a local area network (LAN) 1552 and/or larger networks, e.g., a wide area network (WAN) 1554. Such LAN and WAN networking environments are commonplace in offices, and companies, and facilitate enterprise-wide computer networks, such as intranets, all of which may connect to a global communication network, e.g., the Internet.

When used in a LAN networking environment, the computer 1502 is connected to the local network 1552 through a wired and/or wireless communication network interface or adapter 1556. The adaptor 1556 may facilitate wired or wireless communication to the LAN 1552, which may also include a wireless access point disposed thereon for communicating with the wireless adaptor 1556. When used in a WAN networking environment, the computer 1502 can include a modem 1558, or is connected to a communications server on the WAN 1554, or has other means for establishing communications over the WAN 1554, such as by way of the Internet. The modem 1558, which can be internal or external and a wired or wireless device, is connected to the system bus 1508 *via* the serial port interface 1542. In a networked environment, program modules depicted relative to the computer 1502, or portions thereof, can be stored in the remote memory/storage device 1550. It will be appreciated that the network connections shown are exemplary and other means of establishing a communications link between the computers can be used.

The computer 1502 is operable to communicate with any wireless devices or entities operatively disposed in wireless communication, *e.g*., a printer, scanner, desktop and/or portable computer, portable data assistant, communications satellite, any piece of equipment or location associated with a wirelessly detectable tag (e.g., a kiosk, news stand, restroom), and telephone. This includes at least Wi-Fi and Bluetooth^{™} wireless technologies. Thus, the communication can be a predefined structure as with conventional network or simply an ad hoc communication between at least two devices.

Wi-Fi, or Wireless Fidelity, allows connection to the Internet from a couch at home, a bed in a hotel room or a conference room at work, without wires. Wi-Fi is a wireless technology like a cell phone that enables such devices, *e.g*., computers, to send and receive data indoors and out; anywhere within the range of a base station. Wi-Fi networks use radio technologies called IEEE 802.11 (a, b, g, *etc.)* to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11a) or 54 Mbps (802.11b) data rate, for example, or with products that contain both bands (dual band), so the networks can provide real-world performance similar to the basic 10BaseT wired Ethernet networks used in many offices.

Referring now to FIG. 16, there is illustrated a schematic block diagram of an exemplary computing environment 1600 in accordance with the subject invention. The system 1600 includes one or more client(s) 1602. The client(s) 1602 can be hardware and/or software (e.g., threads, processes, computing devices). The client(s) 1602 can house cookie(s) and/or associated contextual information by employing the subject invention, for example. The system 1600 also includes one or more server(s) 1604. The server(s) 1604 can also be hardware and/or software (*e.g.*, threads, processes, computing devices). The servers 1604 can house threads to perform transformations by employing the subject invention, for example. One possible communication between a client 1602 and a server 1604 can be in the form of a data packet adapted to be transmitted between two or more computer processes.
The data packet may include a cookie and/or associated contextual information, for example. The system 1600 includes a communication framework 1606 (*e.g.,* a global communication network such as the Internet) that can be employed to facilitate communications between the client(s) 1602 and the server(s) 1604.

Communications can be facilitated *via* a wired (including optical fiber) and/or wireless technology. The client(s) 1602 are operatively connected to one or more client data store(s) 1608 that can be employed to store information local to the client(s) 1602 (*e.g*., cookie(s) and/or associated contextual information). Similarly, the server(s) 1604 are operatively connected to one or more server data store(s) 1610 that can be employed to store information local to the servers 1604.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates organizing data, the system comprising:
an association store component having one or more association components, the one or more association components having a relationship to one or more data components; and
an association manager component that dynamically maintains the relationship based upon a property of the one or more data components.

2. The system of claim 1, the property is a location of the related one or more data components.

3. The system of claim 1, the association manager component includes a query component that generates a query that is employed in connection with determining the property of the one or more data components.

4. The system of claim 3, the association manager component updates the one or more association components based upon the determined property.

5. A user interface that employs the system of claim 3.

6. The system of claim 3, the query component comprises:
a rule engine component that automatically instantiates a rule that implements a predefined criteria; and
a rule evaluation component that applies the rule with respect to the one or more data components to update the one or more association components.

7. The system of claim 3, the query component comprises an artificial intelligence component that predicts a user intention as a function of historical user criteria.

8. The system of claim 7, the artificial intelligence component comprises an inference component that facilitates automatic update of the one or more data components as a function of the predicted user intention with respect to a characteristic.

9. The system of claim 7, the inference component employs a utility-based analyses in performing the automatic update.

10. The system of claim 3, further comprising an analyzer component that verifies integrity of the one or more association components.

11. The system of claim 10, the analyzer component generates a prompt that alerts of a change in the property of the one or more data component.

12. The system of claim 11, the analyzer component comprising:
a rule engine component that automatically instantiates a rule that implements a predefined criteria; and
a rule evaluation component that applies the rule with respect to the one or more data components to interrogate the one or more association components.

13. The system of claim 12, the analyzer component comprising an artificial intelligence component that predicts a user intention as a function of historical user criteria.

14. The system of claim 13, the artificial intelligence component includes an inference component that facilitates interrogating the one or more data components as a function of the predicted user intention with respect to a characteristic.

15. The system of claim 14, the inference component employs a utility-based analyses in performing the automatic update.

16. The system of claim 15, the inference component employs a statistical-based analysis to infer an action that a user desires to be automatically performed.

17. The system of claim 10, the association manager component is located remotely from the one or more data component.

18. A desktop computing system that employs the system of claim 1.

19. A portable computing device that employs the system of claim 1.

20. A computer readable medium having stored thereon the components of claim 1.

21. The system of claim 1, at least one of the one or more data components is an electronic file.

22. The system of claim 1, at least one of the one or more data components is a dynamic list.

23. The system of claim 1, at least one of the one or more data components is a folder.

24. A method for organizing data, the method comprising:
relating an association component to a data component; and
dynamically maintaining the relationship based upon a property of the data component.

25. The method of claim 24, the property is a location.

26. The method of claim 24, further comprising generating a query that is employed to determine the property of the data component.

27. The method of claim 26, further comprising updating the association component based upon the determined property.

28. The method of claim 27, further comprising applying a rule that determines the update of the association component.

29. The method of claim 27, further comprising predicting a user intention that determines the update of the association component.

30. The method of claim 26, further comprising interrogating the data component based upon the property as a function of the property.

31. The method of claim 26, further comprising verifying integrity of the association component.

32. The method of claim 31, further comprising prompting of a change in the property of the data component.

33. The method of claim 31, further comprising applying a rule that determines the change in the property of the data component.

34. The method of claim 31, further comprising predicting a user intention that determines the change in the property of the data component.

35. The method of claim 24, the data component is a data file.

36. The method of claim 24, the data component is a relationship.

37. A computer readable medium having stored thereon computer executable instructions for carrying out the method of claim 24.

38. A system that facilitates organizing data, the system comprising:
means for relating an association component to a data component; and
means for dynamically maintaining the association.

39. The system of claim 38, further comprising means for determining a property of the relationship and automatically updating the association component in accordance with the property.

40. The system of claim 39, further comprising means for analyzing the relationship and generating a prompt in accordance with a change in the property.

41. The system of claim 38, the means for relating is a rule-based operation.

42. The system of claim 38, the means for relating is an artificial intelligence operation.

43. A data organization system, the system comprising:
a query component that searches a data store and detects one or more data components that satisfy a query;
a list component having a plurality of identifiers, the identifiers reference the one or more data components; and
an association manager component that dynamically maintains the identifiers in accordance with the query.

44. The system of claim 43, the query component further comprises a rule-based mechanism that automates a query operation.

45. The system of claim 43, the query component further comprises an AI-based mechanism that automates a query operation based upon an inference.
